Europäisches Patentamt

European Patent Office

Office européen des brevets

(11) Publication number: **0 337 365**
**A2**

## EUROPEAN PATENT APPLICATION

(21) Application number: **89106345.5**

(22) Date of filing: **11.04.89**

(51) Int. Cl.⁴: **C08F 10/00 , C08F 2/34 ,
C08F 4/24**

(30) Priority: **12.04.88 US 180579**

(43) Date of publication of application:
**18.10.89 Bulletin 89/42**

(84) Designated Contracting States:
**AT BE DE ES FR GB GR IT NL SE**

(71) Applicant: **UNION CARBIDE CORPORATION**
**39 Old Ridgebury Road**
**Danbury Connecticut 06817(US)**

(72) Inventor: **Cano, Daniel**
**506 Santa Fe Street**
**Victoria Texas 77904(US)**
Inventor: **Michie, William James**
**14 Obert Drive**
**Raritan New Jersey 08869(US)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) **Method for decreasing swell properties of alpha olefins.**

(57) A method for decreasing the swell properties of polymers produced by fluidized bed polymerization of alpha olefins with a chromium-titanium containing catalyst by utilizing the chromium in the hexavalent state and in the range of about 0.15 to 0.40 weight percent and by regulating the ethylene partial pressure and temperature of the polymerization.

EP 0 337 365 A2

# METHOD FOR DECREASING SWELL PROPERTIES OF ALPHA OLEFINS

## BACKGROUND OF THE INVENTION

### Field of the Invention

The invention relates to the catalytic copolymerization of ethylene with other copolymerizable monomers in a fluid bed reactor and more particularly to an improved method for the catalytic copolymerization of ethylene with other copolymerizable monomers in a fluid bed reactor to produce resins having decreased swell properties.

### Description of the Prior Art

The term swell properties as used herein refers to the expansion of a free form parison (or annular tube of molten plastic) upon exit from any die geometry (convergent, divergent, straight, etc.) after having been delivered under pressure to said die by means of a conventional plasticating extruder. This expansion of the free form parison occurs in two dimensions i.e., radially to increase the thickness of the parison and circumferentially to include the diameter of the parison.

The preparation of ethylene polymers in the absence of solvents under low pressures about 40-350 psi in a fluid bed reactor, using various supported chromium containing catalysts is disclosed in U.S. Pat. Nos. 3,023,203,; 3,687,920; 3,704,287; 3,709,853 and 4,115,639. These publications also disclose that the ethylene polymers produced may be ethylene homopolymers or copolymers of ethylene and one or more other alpha olefins.

The disclosures in these patent publications are primarily concerned with the preparation of high density ethylene polymers.

Catalysts systems which can be employed in these fluidized bed processes for producing high density ethylene polymers have also been recently sophisticated and some catalysts include titanium and chromium such as disclosed in U.S. Patents 3,662,521 issued to John P. Hogan on Nov. 23, 1971 and which is assigned to Phillips Petroleum Co. According to this patent polymers of 1-olefins can be obtained by using a catalyst which comprises a combination of a support, at least one chromium-containing compound, and at least one titanium-containing compound wherein the titanium-containing compound is added to the support using a nonaqueous medium and then the chromium-containing compound is added to the titanium-containing support also using a nonaqueous medium.

In addition, the chromium-containing compound should be employed so that the final catalyst contains from about 0.1 to about 50 preferably from about 0.1 to about 10, weight percent, based on the weight of the final catalyst chromium oxide calculated as chromium trioxide.

The catalyst can be employed in any conventional solution or particle-form process for homopolymerizing or copolymerizing 1-olefins such as those having two to eight carbon atoms per molecule, inclusive. Examples of suitable 1-olefins include ethylene, propylene, 4-methylpentene-1, hexene-1 octene-1, and the like.

The polymers produced using the catalyst of the patent are useful for making plastic articles such as bottles, e.g. baby bottles, bottle carriers, and the like.

Unfortunately however, when attempts were made to produce resin in a fluidized bed which could be employed for making certain plastic articles such as plastic bottles and the like it was found that the resin possessed extremely high swell properties which did not make them suitable for the fabrication of plastic bottles and the like. This is primarily due to the fact that the resin swell manifests itself during parison formation and results in bottles that are too heavy and which can not be trimmed in the normal manner.

## SUMMARY OF THE INVENTION

Broadly contemplated the present invention provides an improvement in the method for the fluid bed polymerization of alpha-olefins wherein an alpha-olefin is polymerized in the presence of a chromium

2

titanium containing catalyst to produce copolymers having swell properties, the improvement in the method which results in copolymers having decreased swell properties which comprises conducting said polymerization in the presence of a chromium titanium containing catalyst wherein the chromium is in a hexavalent state and wherein the chromium content of said catalyst is in the range of 0.15 to about 0.40 weight percent based on the weight of the catalyst.

Preferably the chromium concentration in the catalyst is in the range of about 0.21 to about 0.30.

## BRIEF DESCRIPTION OF THE DRAWINGS

The drawing shows a fluid bed reactor system in which the catalyst system of the present invention may be employed.

## DESCRIPTION OF THE INVENTION

The copolymers which may be prepared in the process of the present invention are copolymers of a major mol percent (>85%) of ethylene, and a minor mol percent (<15%) of one or more $C_3$ to $C_6$ alpha olefins. These alpha olefins are preferably propylene, butene-1, pentene-1 and hexene-1.

The copolymers have a density of about 0.940 to 0.960 g/cc for high density polymers. The density of the polymer, at a given melt index level for the polymer, is primarily regulated by the amount of the $C_3$ to $C_6$ comonomer which is copolymerized with the ethylene. In the absence of the comonomer, the ethylene would homopolymerize with the catalyst of the present invention to provide homopolymers having a density of about 0.960 or greater. Thus, the addition of progressively larger amounts of the comonomers to the polymers results in a progressive lowering, in approximately a linear fashion, of the density of the polymer. The amount of each of the various $C_3$ to $C_6$ comonomers needed to achieve the same result will vary from monomer to monomer, under the same reaction conditions.

Thus, to achieve the same results, in terms of a driven density, at a driven melt index level, larger molar amounts of the comonomers would be needed in the order of $C_3 > C_4 > C_5 > C_6$.

The melt index or flow index of a polymer is a reflection of its molecular weight. Polymers having a relatively high molecular weight, have a relatively low melt index or flow index.

The copolymers made in the process of the present invention have a residual catalyst content, in terms of parts per million of chromium metal, of the order of less than about 10 parts per million, and preferably of the order of less than about 3 parts per million. This catalyst residue content is primarily a function of the productivity of the catalyst. The productivity of the catalyst is primarily a function of the chromium content thereof.

The copolymers of the present invention have an average particle size of the order of about 0.005 to about 0.06 inches, and preferably of about 0.01 to about 0.05 inches, in diameter. The particle size is important for the purposes of readily fluidizing the polymer particles in the fluid bed reactor, as described below.

Activated Supported Catalyst

The catalyst used in the process of the present invention is a chromium oxide ($CrO_3$) based catalyst which is formed, in general, by depositing a suitable chromium compound and titanium compound on a dried support, and then activating the resulting composite composition by heating it in air or oxygen at a temperature of about 300°C to about 900°C, and preferably at about 700°C to 850°C, for at least 2 hours, and preferably for about 5 to 15 hours. The chromium compound and titanium compound are usually deposited on the support from solutions thereof and in such quantities as to provide, after the activation step, the desired levels of Cr, Ti in the catalyst. After the compounds are placed on the support and it is activated, there results a powdery, free-flowing particulate material. About 0.001-1 weight percent of the composite catalyst is employed per pound of polymer produced.

The order of the addition of the chromium compound and titanium compound to the support is not critical provided that all of the compounds are added before the activation of the composite catalyst and the support is dried before the titanium compound is added thereto.

After the activation of the supported catalyst it contains, based on the combined weight of the support and the chromium, titanium therein, about 0.15 to 0.40 and preferably about 0.21 to 0.30, weight percent of chromium in the hexavalent state (calculated as Cr), about 1.5 to 9.0, and preferably about 3.0 to 7.0, weight percent of titanium (calculated as, Ti).

The chromium compounds which may be used include $CrO_3$, or any compound of chromium which is ignitable to $CrO_3$ under the activation conditions employed. At least a portion of the chromium in the supported, activated catalyst must be on the hexavalent state. Chromium compounds other than $CrO_3$ which may be used are disclosed in U.S. Patent Nos. 2,825,721 and 3,622,521 (the disclosures of which patents are hereby incorporated by reference) and include chromic acetyl acetonate, chromic nitrate, chromic acetate, chromic chloride, chromic sulfate, and ammonium chromate.

Water soluble compounds of chromium, such as $CrO_3$ are the preferred compounds for use in depositing the chromium compound on the support from a solution of the compound. Organic solvent soluble chromium compounds may also be used.

The titanium compounds which may be used include all those which are ignitable to $TiO_2$ under the activation conditions employed, and include those disclosed in U.S. Patent No. 3,622,521 (the disclosure of which patent is hereby incorporated by reference). These compounds include those having the structures $(R')_n Ti(OR')_m$ and $(RO)_m Ti(OR')_n$ where m is 1,2,3, or 4; n is 0,1,2 or 3 and m + n = 4, and, $TiX_4$ where R is a $C_{\cdot}$ to $C_{\cdot 2}$ alkyl, aryl or cycloalkyl group, and combinations thereof, such as aralkyl, alkaryl, and the like;

$R'$ is R, cyclopentadienyl, and $C_2$ to $C_{12}$ alkenyl groups, such as ethenyl, propenyl, isopropenyl, butenyl and the like; and

X is chlorine, bromine, fluorine or iodine.

The titanium compounds would thus include titanium tetrachloride, titanium tetraisopropoxide and titanium tetrabutoxide. The titanium compounds are more conveniently deposited on the support from a hydrocarbon solvent solution thereof.

The inorganic oxide materials which may be used as a support in the catalyst compositions of the present invention are porous materials having a high surface area, that is, a surface area in the range of about 50 to about 1000 square meters per gram, and a particle size of about 10 to 200 microns. The inorganic oxides which may be used include silica, alumina, thoria, zirconia and other comparable inorganic oxides, as well as mixtures of such oxides.

The catalyst support which may have the chromium compound deposited thereon should be dried before it is brought into contact with the titanium compound. This is normally done by simply heating or pre-drying the catalyst support with a dry inert gas or dry air prior to use. It has been found that the temperature of drying has an appreciable effect on the molecular weight distribution and the melt index of the polymer produced. The preferred drying temperature is 100° to 300° C.

Activation of the supported catalyst can be accomplished at nearly any temperature up to about its sintering temperature. The passage of a stream of dry air or oxygen through the supported catalyst during the activation aids in the displacement of the water from the support. Activation temperatures of from about 300° C to 900° C for a short period of about 6 hours or so should be sufficient if well dried air or oxygen is used, and the temperature is not permitted to get so high as to cause sintering of the support.

Any grade of support can be used but microspheroidal intermediate density (MSID) silica having a surface area of 300 square meters per gram. and a pore diameter of about 200 A, and an average particle size of about 40 microns about 0.0016 inches (W.R. Grace's G-955 grade) is preferred.

When incorporated in a porous support of high surface area, as described herein, the chromium forms active sites on the surface and on the pores of the support. Although the actual mechanism of the process is not entirely understood, it is believed that the polymers begin to grow at the surface as well as in the pores of the supported catalyst. When a pore grown polymer becomes large enough in the fluidized bed it ruptures the support thereby exposing fresh catalyst sites in the inner pores of the support. The supported catalyst may thus subdivide many times during its lifetime in the fluidized bed and thereby enhance the production of low catalyst residue polymers, thereby eliminating the need for recovering the catalyst from the polymer particles. If the support is too large, it may resist rupture thereby preventing subdivision which would result in catalyst waste. In addition, a large support may act as a heat sink and cause "hot spots" to form.

The Polymerization Reaction

After the activated catalyst has been formed, the copolymerization reaction is conducted by contacting a stream of the comonomers, in a fluid bed reactor as described below, and substantially in the absence of

4

catalyst poisons such as moisture, oxygen, carbon monoxide, carbon dioxide and acetylene, with a catalytically effective amount of the catalyst at a temperature and a pressure sufficient to initiate the polymerization reaction. It is extremely critical that the poisons be essentially eliminated since only minor amounts (i.e.$\leq$2 ppm of carbon monoxide in the recycle gas) has been found to dramatically, adversely affect the swell properties of the polymer.

In order to achieve the desired density ranges in the copolymers it is necessary to copolymerize enough of the $\geq$ $C_3$ monomers with ethylene to achieve a level of 1.0 to 8 mol percent of the $C_3$ to $C_6$ comonomer in the copolymer. The amount of comonomer needed to achieve this result will depend on the particular comonomer(s) being employed. Further, the various intended comonomers have different reactivity rates, relative to the reactivity rate of ethylene with respect to the copolymerization thereof with the catalysts of the present invention. Therefore the amount of comonomer used in the stream of monomers fed to the reactor will also vary depending on the reactivity of the comonomer.

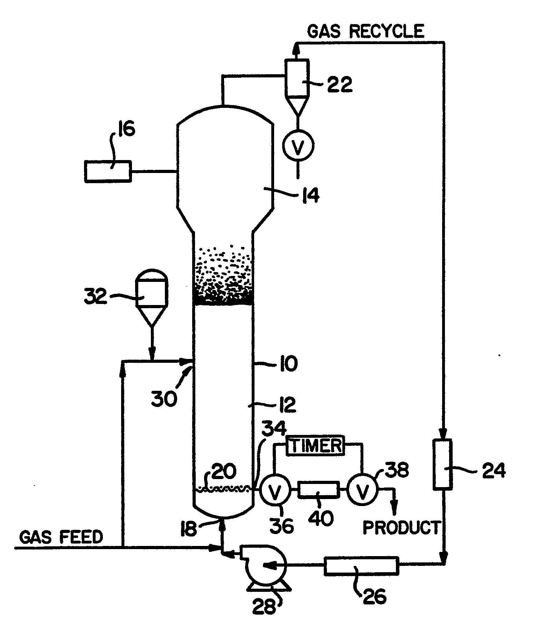

A fluidized bed reaction system which can be used in the practice of the process of the present invention is illustrated in Fig. 1. With reference thereto the reactor 10 consists of a reaction zone 12 and a velocity reduction zone 14.

The reaction zone 12 comprises a bed of growing polymer particles, formed polymer particles and a minor amount of catalyst fluidized by the continuous flow of polymerizable and modifying gaseous components in the form of make-up feed and recycle gas through the reaction zone. To maintain a viable fluidized bed, mass gas flow through the bed must be above the minimum flow required for fluidization, preferably from about 1.5 to about 10 times $G_{mf}$ and more preferably from about 3 to 6 times $G_{mf}$. $G_{mf}$ is used in the accepted form as the abbreviation for the minimum mass gas flow required to achieve fluidization. C.Y. Wen and Y.H. Yu, "Mechanics of Fluidization", Chemical Engineering Progress Symposium Series, Vol. 62 p. 100-111 (1966).

It is essential that the bed always contains particles to prevent the formation of localized "hot spots" and to entrap and distribute the powdery catalyst throughout the reaction zone. On start up, the reaction zone is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of the desired particles supplants the start-up bed.

The supported catalyst used in the fluidized bed is preferably stored for service in a reservoir 32 under a nitrogen blanket.

Fluidization is achieved by a high rate of gas recycle to and through the bed, typically in the order of about 50 times the rate of feed of make-up gas. The fluidized bed has the general appearance of a dense mass of viable particles in possibly free-vortex flow as created by the percolation of gas through the bed. The pressure drop through the bed is equal to or slightly greater than the mass of the bed divided by the cross-sectional area. It is thus dependent on the geometry of the reactor.

Make-up gas is fed to the bed at a rate of equal to the rate at which particulate polymer product is withdrawn. The composition of the make up gas is determined by a gas analyzer 16 positioned above the bed. The gas analyzer determines component deficiency in the gas being recycled and the composition of the make-up gas is adjusted accordingly to maintain an essentially steady state gaseous composition within the reaction zone.

To insure complete fluidization, the recycle gas and, where desired, part of the make-up gas are returned to the reactor at point 18 below the bed. There exists a gas distribution plate 20 above the point of return to aid fluidizing the bed.

The portion of the gas stream which does not react in the bed constitutes the recycle gas which is removed from the polymerization zone, preferably by passing it into a velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates to prevent dust from contacting heat transfer surfaces and compressor blades.

The recycle gas is then passed through a heat exchanger 26 wherein it is stripped of heat of reaction before it is returned to the bed. By constantly removing heat of reaction, no noticeable temperature gradient appears to exist within the upper portion of the bed. A temperature gradient will exist in the bottom 6 to 12 inches of bed, between the temperature of the inlet gas and the temperature of the remainder of the bed. Thus it has been observed that the bed acts to almost immediately adjust the temperature of the recycle gas above this lower 6 to 12 inch bed zone to make it conform to the temperature of the bed thereby maintaining itself at an essentially constant temperature under steady state conditions. The recycle is then compressed in a compressor 28 and returned to the reactor at its base 18 and to the fluidized bed through distribution plate 20. The compressor 28 can also be placed upstream of the heat exchanger 26.

The distribution plate 20 plays an important role in the operation of the reactor. The fluidized bed contains growing and formed particulate polymer particles as well as catalyst particles. As the polymer particles are hot and possible active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, a plate of the bubble cap type and the like. The elements of the plate may all be stationary, or the plate may be of the mobile type disclosed in U.S. Pat. No. 3,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

Hydrogen may be used as a chain transfer agent in the polymerization reaction of the present invention in amounts varying between about 0.001 to about 10 moles of hydrogen per mole of ethylene and comonomer.

Also, as desired for temperature control of the system, any gas inert to the catalyst and reactants can also be present in the gas stream.

It is essential to operate the fluid bed reactor at a temperature below the sintering temperature of the polymer particles. To insure that sintering will not occur, operating temperatures below the sintering temperature are desired. It has also been discovered that temperatures have an effect on the swell properties of the final resin. For the production of the ethylene copolymers in the process of the present invention an operating temperature of about $30^\circ$ C to $114^\circ$ C is preferred, and a temperature of about $110^\circ$ C to $112^\circ$ C is most preferred. Temperatures of about $110^\circ$ C to $112^\circ$ C are used to prepare products having a density of about 0.952 to 0.955 g/cc.

The fluid bed reactor is operated at pressures of up to about 1000 psi and is preferably operated at a pressure of from about 150 to 350 psi with operation at the higher pressures in such ranges favoring heat transfer since an increase in pressure increases the unit volume heat capacity of the gas.

It is also an important aspect of the invention that at a constant reactor pressure, variations in ethylene partial pressures will have an effect on the parison swell of the resin. Thus the ethylene partial pressure should be controlled within the range of about 125 to about 300 psi with a preferred range of about 150 to about 250 psi.

The catalyst is injected into the bed at a rate equal to its consumption at a point 30 which is above the distribution plate 20. Preferably, the catalyst is injected at a point located about 1/4 to 3/4 up the side of the bed. Injecting the catalyst at a point above the distribution plate is an important feature of this invention. Since the catalysts used in the practice of the invention are highly active, injection into the area below the distribution plate may cause polymerization to being there are eventually cause plugging of the distribution plate. Injection into the viable bed, instead, aids in distributing the catalyst throughout the bed and tends to preclude the formation of localized spots of high catalyst concentration which may result in the formation of "hot spots".

Inert gas such as nitrogen is used to carry the catalyst into the bed.

The production rate of the bed is solely controlled by the rate of catalyst injection. The productivity of the bed may be increased by simply increasing the rate of catalyst injection and decreased by reducing the rate of catalyst injection.

Since any change in the rate of the catalyst injection will change the rate of generation of the heat of reaction, the temperature of the recycle gas is adjusted upwards or downwards to accommodate the change in rate of heat generation. This insures the maintenance of an essentially constant temperature in the bed. Complete instrumentation of both the fluidized bed and the recycle gas cooling system is, of course, necessary to detect any temperature change in the bed so as to enable the operator to make a suitable adjustment in the temperature of the recycle gas.

Under a given set of operating conditions, the fluidized bed is maintained at essentially a constant height by withdrawing a portion of the bed as product at a rate equal to the rate of formation of the particulate polymer product. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at a point 34 at or close to the distribution plate 20 and in suspension with a portion of the gas stream which is vented before the particles settle to preclude further polymerization and sintering when the particles reach their ultimate collection zone. The suspending gas may also be used as mentioned above, to drive the product of one reactor to another reactor.

The particulate polymer product is conveniently and preferably withdrawn through the sequential operation of a pair of timed valves 36 and 38 defining a segregation zone 40. While valve 38 is closed, valve 36 is opened to emit a plug of gas and product to the zone 40 between it an valve 36 which is then closed. Valve 38 is then opened to deliver the product to an external recovery zone. Valve 38 is then closed to wait the next product recovery operation.

Finally, the fluidized bed reactor is equipped with an adequate venting system to allow venting the bed during start up and shut down. The reactor does not require the use of stirring means and/or wall scrapping means.

The supported catalyst system of this invention appears to yield a fluid bed product having an average particle size between about 0.005 to about 0.06 inches and preferably about 0.01 to about 0.05 inches wherein supported catalyst residue is unusually low.

The feed stream of gaseous monomer, with or without inert gaseous diluents, is fed into the reactor at a space time yield of about 2 to 10 pounds/hour/cubic foot of bed volume.

The following Examples are designed to illustrate the process of the present invention and are not intended as a limitation upon the scope thereof.

The swell properties of the polymers produced in the Examples were determined by measuring the manifestation of the parison swell properties as a bottle weight in grams. The procedure to make the bottle was to place the resin in a reciprocating plasticating extruder equipped with a special annular die to form the parison. Once the resin was plasticated, the screw was pushed forward in order to extrude the resin out of the die in a certain fixed time interval of 2 seconds ± 0.1 seconds. The time interval is extremely critical in the development of the parison and for reproducibility. Once the parison is formed two mold halves (which will form a bottle) then close on the parison and the parison is blown up against the cooled mold walls thus forming the bottle. The mold then opens, and the bottle is ejected and trimmed. Then the bottle is weighed to the nearest 0.1 gram.

Examples 1-5 were conducted in a fluidized bed reactor as described in the drawing. The catalyst used in the Examples was a conventional chromium titanium based catalyst supported on porous silica except for varying concentrations of chromium in the hexavalent state. In Example 1, the chromium concentration is below that which is considered suitable according to the present invention.

In Examples 2-5 the catalyst of the present invention was employed and the equipment utilized was essentially as in Example 1. Further conditions and swell results are indicated in Table I.

## Example 1

A fluidized bed reactor was started up at operating conditions designed to produce a high density ethylene copolymer product having a density of 0.953 gms/cc, a flow index of 44g/10 min, and a sticking temperature of 122°C. The reaction was started by feeding catalyst to the reactor precharged with a bed of granular resin similar to the product to be made. The catalyst was a mixture of 0.12 weight percent chromium in the hexavalent state, 3.5 weight percent titanium deposited on 96.38 weight percent Davison grade 952 silica which had been dehydrated at 825°C. Prior to starting catalyst feed, the reactor and resin bed were brought up to the operating temperature of 110°C was purged of impurities by circulating nitrogen through the resin bed. Ethylene, partial pressure and butene/ethylene and hydrogen/ethylene ratios were established at 275 psi, 0.0046 and 0.01-0.02, respectively.

## Examples 2-5

Using the same equipment as in Example 1, four different resins were made through the reactor and product was produced which was measured for swell properties. The operating conditions, other criteria and results are indicated in Table 1.

TABLE I

| | Example No. | | | | |
|---|---|---|---|---|---|
| Catalyst | Conventional | | | | |
| | 1 | 2 | 3 | 4 | 5 |
| $Cr^{+6}$ weight % | 0.12 | 0.19 | 0.15 | 0.20 | 0.222 |
| Ti weight % | 3.5 | 3.5 | 3.96 | 3.27 | 3.35 |
| Silica Type | 952 | 955 | 955 | 955 | 955 |
| Reactor Gas Stream Composition | | | | | |
| $C_2$ Partial Pressure (psi) | 275 | 204 | 255 | 189 | 159 |
| $N_2$ Partial Pressure (psi) | 30 | 101 | 50 | 116 | 146 |
| $C_4/C_2$ (vapor) | 0.0046 | --- | --- | --- | --- |
| $C_6/C_2$ (vapor) | --- | 0.0009 | 0.0009 | 0.00095 | 0.0010 |
| $H_2/C_2$ | .01-.02 | .001-.01 | .002 | .01 | .012 |
| Reactor Pressure (psi) | 305 | 305 | 305 | 305 | 305 |
| Reactor Temperature (°C) | 110 | 112 | 112 | 110.4 | 111 |
| Superficial Gas Velocity (ft/sec) | 2.0 | 1.9 | 2.4 | 2.4 | 2.4 |
| Space Time Yield (1b/hr-ft$^3$) | --- | 6.3 | 6.6 | 7.15 | 7.38 |
| FI g/10 min[1] | 44 | 42 | 45 | 43.2 | 43.7 |
| Density (g/cc)[2] | 0.9528 | 0.9535 | 0.953 | 0.953 | 0.953 |
| Parison Swell Measurement as manifested by Bottle Weight (grams) | 84 | 79 | 82 | 76.3 | 74.4 |

1. Flow index measurement was made in accordance with ASTM D-1238 (condition F)
2. Density was measured in accordance with ASTM D-1505 after a plaque was made in accordance with ASTM D-1928 procedure C.

As can be seen from the above the swell properties of the polymer can be increased by controlling the chromium content of the catalyst. Better results are obtained if the ethylene partial pressure and polymerization temperatures are also controlled. The swell properties of the polymers can be utilized in the formation of bottles which have bottle weights consistent with those desired for all known commercial utilizations.

**Claims**

1. Method for the fluid bed polymerization of alpha-olefins wherein an alpha-olefin is polymerized in the presence of a chromium titanium containing catalyst to produce copolymers having swell properties, charakterized in conducting said polymerization in the presence of chromium titanium containing catalyst wherein the chromium is in a hexavalent state and wherein the chromium content of said catalyst is in the range of about 0.15 to about 0.40 weight percent based on the weight of the catalyst.

2. The method according to claim 1 wherein the chromium concentration in the catalyst is in the range of about 0.21 to about 0.30 weight percent based on the weight of the catalyst.

3. The method according to one or both of the claims 1 to 2 wherein said alpha-olefins produce copolymers which are copolymers of a major mol percent (>85%) of ethylene, and a minor mol percent (<15%) of one or more $C_3$ to $C_6$ alpha-olefins.

4. The method according to claim 3 wherein said alpha-olefins are ethylene or propylene, or butene-1, or pentene-1 or hexene-1 or mixtures thereof.

5. The method according to one or more of the claims 1 to 4 wherein said copolymers have a density of about 0.940 to about 0.960.

6. The method according to one or more of the claims 1 to 5 wherein the ethylene partial pressure is controlled within the range of about 125 to about 300 psi.

7. The method according to one or more of the claims 1 to 6 wherein the ethylene partial pressure is controlled within the range of about 150 to about 250 psi.

8. The method according to one or more of the claims 1 to 7 wherein the polymerization is conducted at a temperature of about 30° C to about 114° C.

9. The method according to one or more of the claims 1 to 8 wherein the polymerization is conducted at a temperature of about 110° C to about 112° C.

GAS RECYCLE

GAS FEED

PRODUCT

TIMER